# EUROPEAN PATENT APPLICATION

(11) **EP 4 779 149 A1**
(43) Date of publication of application: **22.07.2026**
(21) Application number: 25152160.5
(22) Date of filing: 16.01.2025
(51) Int. Cl.: F03D 7/02, F03D 7/04

(54) **ADJUSTMENT OF BLADE PITCH CONTROL**

(71) Applicant: Siemens Gamesa Renewable Energy A/S, 7330 Brande (DK)
(72) Inventor: Alberts, Johannes Gerhardes Wardjan, 2660 Brøndby Strand (DK); Esbensen, Thomas, 7400 Herning (DK); Rittel, Felix, 2900 Hellerup (DK); Tibaldi, Carlo, 2300 København (DK); Vavatsikos, Panagiotis, 2500 Valby (DK)
(74) Representative: SGRE-Association

(57) **Abstract**

A method of controlling the operation of a wind turbine is provided. The wind turbine (100) comprises a wind turbine rotor (120) with one or more rotor blades (121, 122, 123) and a control system (10) that operates at least one load reduction pitch control function (40) configured to adjust a blade pitch angle to reduce a blade load. The method comprises monitoring an operating parameter of the wind turbine (100), generating, by the load reduction pitch control function (40), a pitch adjustment output (62) based on the monitored operating parameter (61), and determining, based on the monitored operating parameter (61) and/or the pitch adjustment output (62), if a predetermined criterion is fulfilled. If the predetermined criterion is fulfilled, a power output of the wind turbine (100) and/or a rotational speed of the rotor (120) of the wind turbine (100) is curtailed.

## Description

### FIELD OF THE INVENTION

The present invention relates to a method of controlling the operation of a wind turbine that operates at least one load reduction pitch control function. It further relates to a respective control system and to a respective computer program by which the operation of the wind turbine may be controlled.

### BACKGROUND

In several operating scenarios, the rotor blades of a wind turbine rotor, or the rotor itself, may be exposed to increased loads. A typical example is a wind gust that results in a large bending moment being applied to the rotor blades. As another example, in a half-wake situation, a yaw moment may be applied to the wind turbine rotor, wherein each rotor blade periodically experiences an increased blade load. As a further example, shear winds may result in a tilt moment being applied to the wind turbine rotor.

It is desirable to avoid such increased loads and in particular to avoid damage to the rotor blades of the wind turbine rotor and to other components of the wind turbine. For example, upon excessive bending of a rotor blade, the rotor blade may come into contact with the wind turbine tower, which may result in significant damage. It is known to reduce such loads using control schemes that reduce the blade or rotor loading in certain situations, such as a load-optimized pitch control (LOPC). Respective features may use blade load sensors to measure respective moments and may adjust the pitch angle to reduce loads. Although certain problems may be reduced by such control schemes, they may create additional problems, such as an increase in pitch-bearing damage (PBD) and a loss of annual energy production (AEP) .

In half-wake situations, high turbulence conditions, shear conditions of the wind and the like, cycling loading of the rotor blades may be experienced. Existing control schemes may not avoid that a large amount of energy is deposited in the yaw brake of the wind turbine in such situations, which may cause heating and increased wear. Further, the load changes may be quite significant, for example when the rotor blade moves from a position without wake effects to a position where it experiences wake effects. Such load changes may further create shocks on the wind turbine structure, which may result in an increased fatigue damage and reduced lifetime. Existing LOPC methods may not be capable of reacting sufficiently fast to mitigate sudden loading of components, for example due to system delay caused by signal processing and by delay in the system reaction, e.g. due to inertia. It is desirable to avoid damage to the wind turbine and to avoid a reduction of the lifetime of the wind turbine and its components.

### SUMMARY

Accordingly, there is a need to mitigate at least some of the drawbacks mentioned above and to avoid damage to and lifetime reduction of wind turbine components.

This need is met by the features of the independent claims. The dependent claims describe embodiments of the invention.

According to an embodiment of the invention, a method of controlling the operation of a wind turbine is provided. The wind turbine comprises a wind turbine rotor with one or more rotor blades and a control system that operates at least one load reduction pitch control function (e.g., a load-optimized pitch control, LOPC function) configured to adjust a blade pitch angle to reduce a blade load. The method comprises monitoring an operating parameter of the wind turbine based on measurements of a blade load obtained for one or more of the rotor blades and generating, by the load reduction pitch control function, a pitch adjustment output based on the monitored operating parameter. The pitch adjustment output is provided for applying an actual pitch adjustment to one or more of the rotor blades (the actual pitch adjustment may for example be determined from the pitch adjustment output). Based on the monitored operating parameter and/or the pitch adjustment output, it is determined if a predetermined criterion is fulfilled. Fulfillment of the predetermined criterion indicates an actual and/or an expected increase in a blade load, for example in a peak load of the respective blade. If the predetermined criterion is fulfilled, the method may comprise curtailing a power output of the wind turbine and/or curtailing a rotational speed of the rotor of the wind turbine.

By such method, excessive loading of the rotor blades and/or of other structures of the wind turbine may be reduced significantly. For example, the curtailment may reduce the changes of the blade loading, so that respective shocks and vibrations experienced by the wind turbine structure may be reduced or avoided. Furthermore, since the blade loading may be reduced, the activation of the load reduction pitch control function may likewise be reduced. Consequently, frequent application of different actual pitch adjustments to the rotor blades, e.g. different pitch offsets, may be avoided. Thereby, wear may be reduced and potential damage to the blade bearings and to the pitch drive mechanism may be avoided. Consequently, the solution may both reduce excessive activations of such load reduction control functions and at the same time avoid unacceptably high loads acting on the blades, the rotor, and the wind turbine structure.

Furthermore, conventional load reduction pitch control functions may not be capable of reducing loads to a desired level in all situations, e.g. due to the environmental conditions, bad tuning of such functions and the like. The present solution may thus reduce the loading of the wind turbine and in particular of the blades to a desired level in situations in which such control functions fail to do so. For example, such control functions may become saturated in respective conditions such as wake or half-wake, high turbulence, and shear conditions, meaning that their control action cannot result in any further reduction of the loading down to a desired level. By the disclosed solution, it may be avoided that respective wind turbine components, such as the blades, experience loads higher than their design loads, for longer periods of time. The solution may thus reduce the risk of damage to wind turbine components and may limit the lifetime reduction in challenging operating environments.

The method may be performed during operation of the wind turbine, e.g. while the wind turbine is generating electrical power. The criterion to trigger the curtailment may be set in many different ways. Besides comparing an operating parameter, such as a detected or expected load or moment, such as a blade-bending moment, to a threshold value, the criterion may also be used to detect certain frequency components in the pitch adjustment output or the operating parameter, e.g. to detect a cyclic loading, or may predict for example peak loads to determine if the criterion is met.

Preferably, the predetermined criterion is selected such that fulfillment of the predetermined criterion indicates an increase in the frequency or magnitude of the application of the actual pitch adjustment to the one or more rotor blades. In other words, it may indicate that an actual pitch adjustment is applied more frequently, i.e. more often, or with higher level of adjustment. By means of the curtailment, the frequency of application may be reduced efficiently, thus reducing pitch-bearing damage (PBD). A loss in energy production associated with such curtailment may generally be rather limited, since a comparable loss is experienced by frequent activation of the pitch adjustment by the load reduction pitch control function.

The pitch adjustment output may be, but does not need to be, a pitch offset or pitch angle; it may be any parameter indicative of an adjustment in the pitch control for reducing a blade load and/or a rotor load, such as a cyclic loading, a bending moment, a tilt or yaw moment, and the like. The actual pitch adjustment may for example be generated if the pitch adjustment output fulfills a (second) predefined criterion. Such second criterion may for example be that the pitch adjustment output exceeds a corresponding pitch adjustment threshold, whereupon a command for pitching action is generated. The actual pitch adjustment may for example be applied to a blade pitch angle of one, plural, or each rotor blade, for example as a pitch offset, as a collective pitch offset, as a predetermined pitch angle, and the like.

In an embodiment, the method further comprises filtering the operating parameter, filtering a quantity derived from the operating parameter, and/or filtering the pitch adjustment output by a filter having a low-pass response. The filtered operating parameter, the filtered quantity, and/or the filtered pitch adjustment output, respectively, may be used for determining if the predetermined criterion is fulfilled. Such method may avoid a frequent activation and deactivation of the curtailment, since the curtailment may only be activated if a respective condition is not transient. Filtering by such low-pass response may for example include that lower frequencies, e.g. below a rotational frequency of the wind turbine rotor, are passed. It may thus be avoided that the curtailment is activated in response to a short increase in load. The derived quantity may for example be the probability for the occurrence of a peak load, a value of an expected peak load, a signal power in a frequency range of the operating parameter or the pitch adjustment output, and the like. In particular, it may be any quantity that is indicative of an undesired loading of a rotor blade or the wind turbine rotor.

Further, depending on the implementation, such filtering may also accumulate/ integrate signal values (or absolute values thereof) of the operating parameter and/or the pitch adjustment output, wherein a high accumulated value in a short time period may indicate frequent pitch drive activations, e.g. pitching actions with a 1P component. Such activations may for example occur in half wake situations in which a yaw moment acts on the rotor and in which energy is accumulated in the yaw brake. Applying the criterion may indicate that energy deposited in the yaw brake has reached a limit and the curtailment may be performed to reduce such yaw moment. Thus, the load on the yaw brake may be reduced and excessive heating and wear thereof may be avoided.

The filtering may comprise one or a combination of applying a low-pass filter, applying a band-pass filter, determining an average, determining cumulative average or a weighted cumulative average, integrating or accumulating values, preferably over a predetermined time period or number of samples, applying exponential smoothing, applying a multi-rate filter, taking an absolute value and applying a multi-rate limiter.

The filtering may in particular be performed so as to reduce the variations of the respective signal (i.e., of the operating parameter, the quantity and/or of the pitch adjustment output). Averaging may for example occur by calculating a running mean value, for example by integration with a forgetting factor so that values that lie further in the past have less impact, e.g. are weighted by a lower weight. A multi-rate filter for example has a different filter response depending on whether the signal to be filtered is increasing or decreasing, or depending on an amplitude of the unfiltered signal value, or depending on a rate of increase or decrease. The filter may for example be configured so that the filtered signal value will reduce faster if the applied curtailment is low, e.g. below a respective threshold. A multi-rate limiter may limit the rate at which the respective filtered signal is allowed to change. Such filtering may provide an effective way of efficiently reducing the number of curtailment activations, resulting in the above outlined advantages.

The filtering may comprise integrating or accumulating values (for example over a predetermined time period or number of samples), e.g. values above a predefined threshold, and/or taking an absolute value of the respective signal. Integration or accumulation may be performed to accumulate signal values over a time period. This may occur using, e.g., a forgetting function that removes values from the integration/accumulation that lie a certain time period in the past or a certain number of samples in the past. Said differently, values lying within a defined window that includes the last sample may be integrated/accumulated. Thus, if the operating parameter or the pitch adjustment output shows repeated frequent loads or activations in a relatively short period of time, the accumulated value will increase. This may allow detection of, e.g., a yaw moment acting on the rotor, or other cyclic behavior. As the respective signal values may be positive or negative, an absolute value of the respective signal may be taken. An absolute value may for example be formed prior to integration or accumulation.

The filtering of the operating parameter or quantity derived therefrom may occur with a time constant that is longer or with a cutoff frequency that is lower than a time constant or cutoff frequency, respectively, of a response of a monitoring function that monitors the operating parameter. Accordingly, high-frequency components of the monitored signal, e.g. having a shorter period than the time constant or a higher frequency than a cutoff frequency, may be damped efficiently. The filtering of the pitch adjustment output may occur with a time constant that is longer or with a cutoff frequency that is lower than a time constant or a cutoff frequency, respectively, of a response of the load reduction pitch control function. Again, this may efficiently damp variations of the pitch adjustment output that have a shorter time constant or a higher frequency. For example, in either case, the cutoff frequency may be lower than a frequency of a variation of the monitored signal due to a rotation of the wind turbine rotor. The cutoff frequency of the low pass filter may be lower than a rotational frequency of the wind turbine rotor, e.g. lower that a 1P component of a signal of the operating parameter.

In case of integration or accumulation, the time constant for filtering the operating parameter or the pitch adjustment output may correspond to the time over which the integration/accumulation occurs, which may be longer than a time constant of the monitoring function that monitors the operating parameter or a time constant of the response of the load reduction pitch control function, respectively.

As another example, averaging may occur over a time period longer than 1/3, 1/2, or 1 times the rotational period of the wind turbine rotor. Other choices of the time constant or cutoff frequency are certainly conceivable. The averaging may for example occur over more than 30 seconds, preferably more than 50 or more than 60 seconds if the operating parameter, the derived quantity and/or the pitch adjustment output is filtered. Accumulation/integration preferably occurs over a time period longer than the rotational period of the wind turbine rotor, e.g. at least 2 or 3 times longer.

The filtering of the pitch adjustment output may also include combining, e.g. averaging, individual operating parameters or pitch adjustment outputs each generated for a different rotor blade. This may further reduce fluctuations. For example, the pitch adjustment outputs for two or three rotor blades may be averaged, in addition to the timewise averaging by, e.g., a cumulative or weighted cumulative average and/or the low pass filtering.

In an embodiment, determining if the predetermined criterion is fulfilled, comprises determining if the (unfiltered or filtered) operating parameter, a quantity derived from the operating parameter (e.g., the unfiltered or filtered quantity), and/or the (unfiltered or filtered) pitch adjustment output exceeds a predefined threshold or exceeds at least one of plural predefined thresholds. If the respective threshold is exceeded, the criterion may be fulfilled. A threshold may be exceeded in a positive or in a negative direction, for example if the threshold has a value of zero, it may be exceeded by the parameter dropping below a value of zero. In some examples, two, three, or more thresholds of different value may be employed. This may allow making the curtailment dependent on which threshold has been exceeded.

In an example, the operating parameter and/or the pitch adjustment output (e.g. an absolute value thereof) may be filtered by integration and/or accumulation (e.g. as mentioned above). Upon the integrated/accumulated operating parameter or pitch adjustment output exceeding a respective threshold, a situation in which a high and/or persistent rotor moment (e.g. yaw moment) is present may be detected. A yaw moment may for example be caused by a half wake situation, leading to a cyclic activation of the pitch drives with a 1P component by the load reduction pitch control function. However, a remaining yaw moment acing on the rotor may remain and may need to be counteracted by means of a yaw brake of the wind turbine. If the remaining yaw moment is high and/or persists over a prolonged period of time, energy may accumulate in the yaw brake and may cause significant heating, increased wear and potential damage. The criterion, e.g. the threshold for the accumulated/integrated quantity, may thus be set so as to detect such situation. If the criterion is met, e.g. if the threshold is exceeded, the curtailment may be provided so as to reduce the remaining yaw moment, which may reduce the energy deposited in the yaw brake. Damage to the yaw brake may thus be prevented while avoiding excessive pitch activations and load changes on the rotor blades.

In a further embodiment, determining if the predetermined criterion is fulfilled comprises determining a signal power of the operating parameter and/or the pitch adjustment output in one or more frequency ranges. The predetermined criterion may be fulfilled if the signal power in the one or more frequency ranges or a filtered signal power in the one or more frequency ranges exceeds a predetermined signal power threshold. The frequency range may for example be set such that the signal power present in the frequency range indicates a cyclic behavior of the loading, for example in a half-wake situation or the like. The frequency range may thus for example be set to correspond to a rotational frequency of the wind turbine rotor, and/or to a harmonic thereof. Other frequency ranges are conceivable, depending on the application. Filtering of the signal power may occur with a low-pass response, as described above. Using such filtered value may again avoid a frequent activation of the curtailment, for example if a cyclic condition only exists for a brief moment in time.

In a further embodiment, determining if the predetermined criterion is fulfilled comprises estimating or predicting, based on the operating parameter and/or the pitch adjustment output, respectively, a peak load (e.g. peak load value or peak load change) for a rotor blade and/or a peak load (e.g. peak load value or peak load change) for the wind turbine rotor, and/or estimating, based on the operating parameter and/or the pitch adjustment output, a probability of occurrence of a predetermined load (e.g. a load above a predetermined load value, such as above a threshold load value, e.g. above a peak load capacity of one or more components of the wind turbine, or a load change above a load change threshold value) for a rotor blade and/or for the wind turbine rotor. The criterion may be fulfilled if the estimated or predicted peak load is above a peak load threshold and/or if the probability of occurrence of the predetermined load exceeds a probability threshold. By estimating or predicting the occurrence of such peak load, the control may quickly react to load changes and may avoid the occurrence of such peak loads by applying the respective curtailment. The estimation or prediction may take a time series of preceding operating parameters and/or pitch adjustment outputs into account. These may reliably show how the loads develop over time and may thus allow a precise estimation or prediction. Further, load estimation or prediction may not necessarily need to directly employ load measurements, but may be based on respective moments, such as blade-bending moments and/or rotor moments, or may be based on the pitch adjustment output, which is likewise indicative of respective loads. The probability of occurrence of a respective peak load, or a peak load value may for example be estimated or predicted.

The operating parameter may be indicative of a loading of one or more wind turbine components (e.g. blade load or rotor load, in particular as the operating parameter is determined based on blade load). Estimating or predicting a peak load may thus comprise estimating or predicting a peak value of the operating parameter.

The peak load may be estimated or predicted from the operating parameter or the filtered operating parameter using, e.g., a predictive filter. Examples of such predictive filters are one or a combination of an exponential filter, a Kalman filter, or a particle filter. In other embodiments, the peak load may be estimated or predicted from the operating parameter and a standard deviation obtained for the operating parameter, and/or the peak load may be estimated or predicted from maximum values of the operating parameter, preferably at a predetermined wind turbine rotor position (e.g., maximum blade moment values obtained at a particular wind turbine rotor angle). Preferably, the un-filtered operating parameter or un-filtered pitch adjustment output may be employed to preserve the peak values and peak changes in the data.

In particular, the peak load may be estimated or predicted based on a mean value and a standard deviation of the operating parameter or the filtered operating parameter. If the standard deviation increases above a threshold, it may be determined that the criterion is fulfilled and the curtailment may be triggered. Preferably, the operating parameter is employed for estimating or predicting the peak load (without filtering). Fast increases of the load may thus be detected more reliably.

As an example, a peak load may be estimated by estimating a peak moment for the wind turbine rotor (e.g. yaw moment and/or tilt moment). The estimated peak moment may be compared to a respective peak moment threshold. Such threshold may correspond to a peak moment threshold of one or more structural components of the wind turbine (e.g., blades, rotor, shaft, bearings, tower, and/or the like) and may optionally include a safety margin. Accordingly, if the estimated peak rotor moment gets close to the peak capacity of the structural component, i.e**.** exceeds the respective peak moment threshold, the curtailment may be triggered.

The moment acting on the rotor may thus be reduced efficiently before peak loads occur that exceed the peak capacity of the structural components. Conventional LOPC methods may only react upon occurrence of high loads and, in view of the involved delay, may not be capable of protecting the structural components of the wind turbine from such peak loads.

In an example, estimating a peak load, e.g. a peak moment (such as rotor yaw or tilt moment), may occur by combining a mean operating parameter (indicative of load, e.g. a mean moment) with a (e.g. scaled) standard deviation of the operating parameter. By adding a scaled standard deviation (e.g. scaled by a factor between 1 and 5) to the mean operating parameter, an estimate of a peak load that has a certain probability of occurrence may be obtained. For example, a mean yaw moment (which may be derived from blade load measurements and rotational angle information and by employing a Coleman transformation) may be combined with a scaled standard deviation of the yaw moment.

A mean load value and a standard deviation may be measurable in normal (uncritical) operating conditions. If the mean load, e.g. a mean moment, increases, standard deviation values at such increased mean load may not yet be available, and may not be collected without exceeding a load limit. Thus, the standard deviation observed during normal operation may be scaled up and may be used to estimate peak load values at a higher mean load.

The standard deviation may additionally/alternatively be scaled to set the probability of occurrence of the peak load to be estimated. A value higher than one standard deviation above the mean occurs with a probability of about 15.8%, and a value higher than twice the standard deviation above the mean occurs with a probability of about 2.2% for a natural distribution of the values.

In another example, estimating a peak load, e.g. a peak moment (such as rotor yaw or tilt moment), may be based on maximum values of a blade bending moment obtained for a predetermined rotation angle or angular range of the wind turbine rotor (e.g. at a certain azimuth). The maximum blade bending moment values may be averaged with a forget rate, for example using a moving window, e.g. cumulative average, to estimate a peak load, in particular a peak moment.

If such estimation and/or prediction is employed, the determining if the predetermined criterion is fulfilled and/or the curtailing may further be based on at least one further operating parameter of the wind turbine. The further operating parameter may for example comprise at least one or a combination of a wind speed, a wind direction or wind direction offset (e.g. yaw error), a turbulence intensity, and a rotor speed fluctuation (which may be indicative of turbulences). Additionally employing one or more of these further operating parameters may improve the estimation/prediction of the occurrence of a peak load and/or the taking of an appropriate curtailment action.

The at least one further operating parameter may be employed in the estimation or prediction of the peak load and/or probability. For example, a filter or model used to estimate or predict the peak load may additionally employ the at least one further operating parameter. As another example, a filter or model used to obtain the probability of occurrence of the predetermined load may employ the at least one further operating parameter. As the probability for a sudden loading increases with wind speed, the wind speed may for example be employed as a further operating parameter and may be used to scale up (increased wind speed) or down (decreased wind speed) the probability. Thus, by employing such further operating parameter, a more precise indication of the likelihood of the occurrence of a sudden peak load may be obtained.

The at least one further operating parameter may additionally or alternatively be employed for determining the curtailing to be applied to the power output and/or rotor speed of the wind turbine. The curtailment may be adjusted (increased or decreased) in dependence on the further operating parameter. If the further operating parameter indicates an increased probability for a peak load above a predefined threshold, such as when detecting an increase in wind speed, turbulence intensity, yaw error and/or rotor speed fluctuations, the curtailment may for example be increased. If the further operating parameter indicates a decreased probability for a peak load above a predefined threshold, such as when detecting a decrease in wind speed, turbulence intensity, yaw error and/or rotor speed fluctuations, the curtailment may for example be reduced or limited. Thus, employing such further operating parameter for determining the amount of curtailment may result in the application of less curtailment, thus limiting the loss in energy production.

The curtailing of the power output of the wind turbine may comprise reducing a power set-point of a controller that controls the power output of the wind turbine. The curtailing of the rotational speed of the rotor of the wind turbine may comprise reducing a rotor speed set-point of a controller that controls the rotor speed of the wind turbine. Such controller may for example be a wind turbine controller that operates the wind turbine in accordance with respective set-points. Such wind turbine controller may for example employ maximum power point tracking (MPPT) to derive an optimum rotor speed setpoint and power output setpoint for the prevailing operating conditions, such as wind speed. An efficient curtailment may thus be achieved that does not interfere with the remaining control functions of the wind turbine.

In an embodiment, applying the curtailment comprises at least one of: applying a predetermined (constant) curtailment; applying a curtailment associated with a threshold that has been exceeded, wherein each of plural predefined thresholds is associated with a different level of the (filtered) operating parameter, the (filtered) quantity and/or the (filtered) actual pitch adjustment, respectively, and wherein the curtailment associated with a threshold (preferably the highest threshold) that has been exceeded is applied; applying a curtailment that depends on an amount by which the (filtered) operating parameter, the (filtered) quantity derived from the operating parameter and/or the (filtered) pitch adjustment output exceeds a respective threshold (the curtailment may for example be proportional to the amount of exceedance); or applying a curtailment that lies between two predetermined thresholds, wherein one of the thresholds has been exceeded by the (filtered) operating parameter, the (filtered) quantity and/or the (filtered) pitch adjustment output. Accordingly, different ways of applying the curtailment and in particular of selecting the amount of curtailment to be applied may be used. Applying a predetermined constant curtailment facilitates the control, while applying a curtailment that depends on the value of the respective signal used to evaluate the criterion, e.g. by proportionality or by using several thresholds, may limit the curtailment in situations in which the load exceedance is not particularly high, and may result in a stronger control action if extreme loads are experienced.

The operating parameter may comprise at least one of a blade load, a blade (bending) moment of a rotor blade and a rotor moment of the wind turbine rotor (e.g., tilt or yaw moment).

For example, the operating parameter may comprise or may be one or a combination of: a blade load of one or more rotor blades, a tilt moment of the wind turbine rotor; a yaw moment of the wind turbine rotor; an out-of-plane moment of a blade of the wind turbine rotor (e.g. of each blade) or an average of the out-of-plane moments; a peak out of plane moment; a change of an out-of-plane moment, e.g. of an average out-of-plane moment of the blades of the wind turbine rotor; or a tip-to-tower clearance of a rotor blade tip to a tower of the wind turbine. A blade moment may be a bending moment, e.g. blade root bending moment, it may include a flapwise bending moment and/or an edgewise bending moment. Such bending moment may be converted into an out-of-plane bending moment, which may be used as operating parameter for a blade or collectively for the rotor. For example, for a pitch control function providing clearance control, the operating parameter may comprise an average out-of-plane moment (averaged over the rotor blades) and a rotor tilt moment. Use of such operating parameters may facilitate the operation of the load reduction pitch control function.

The load reduction pitch control function may be or may comprise one or a combination of: an individual pitch control (IPC) function that employs a yaw moment and/or tilt moment of the wind turbine rotor as operating parameters to determine a pitch adjustment output for each individual blade to reduce blade loading; a blade load limiter (BLL) function that employs an out-of-plane moment for each rotor blade as operating parameters to estimate a peak moment for each blade to determine a pitch adjustment output for each blade to reduce the peak moment; a gust induced load limiting (GILL) function that employs positive changes of an average out-of-plane moment of the rotor blades as operating parameter to determine a pitch adjustment output for the rotor blades to reduce blade loading, and optionally to reduce tower loading; or a tip-to-tower clearance control (TTCC) function that employs average out-of-plane moments of the rotor blades and a tilt moment of the wind turbine rotor as operating parameters to determine a pitch adjustment output for the individual rotor blades to reduce blade loading so as to increase or to keep above a limit a tip-to-tower clearance. Other pitch control functions may likewise be employed.

In an embodiment, the method may further comprise ceasing the application of the curtailment if the operating parameter and/or the pitch adjustment output fulfills a predetermined criterion. The termination criterion may correspond to the above-mentioned predetermined criterion; it may be configured in any of the above-described implementations thereof. For example, it may be fulfilled if a respectively filtered value drops below a threshold; if the signal power in a particular frequency range drops below a threshold; if an estimated or predicted peak load drops below a threshold, and the like.

The predetermined criterion and the predetermined termination criterion may be the same or may be different. In the latter case, a hysteresis may be employed this way. Frequent activations and deactivations of the curtailment may thereby be avoided. Such hysteresis may be achieved by setting a termination threshold of the termination criterion lower than a threshold of the predetermined criterion. For example, the predetermined criterion may be met if the (filtered) operating parameter, the (filtered) quantity and/or the (filtered) pitch adjustment output raises above a first threshold, and the predetermined termination criterion may be met if the respective parameter drops below a second threshold, which may be the same as the first threshold or which may be lower than the first threshold (to achieve hysteresis).

As another example, the curtailment may be applied for a predetermined minimum amount of time. Ceasing the application of the curtailment may only be enabled after expiry of the minimum amount of time. Again, this may avoid a frequent activation and deactivation of the curtailment.

According to a further aspect of the invention, a method of controlling the operation of a wind turbine may be provided. The method may comprise any of the above-mentioned features and method steps. In the method, the operating of a load reduction pitch control function and the step of generating of the pitch adjustment output are optional and do not need to be present. In an exemplary embodiment, in which these are not or only optionally provided, the monitored operating parameter may be employed for determining if the predetermined criterion is fulfilled. In some embodiments of such method, the determining if the predetermined criterion is fulfilled may comprise estimating or predicting, based on the operating parameter, a peak load and/or a probability of occurrence of a predetermined load, as described in more detail further above. Such method may be pursued in the claims of the present application or in one or more divisional applications.

According to a further aspect of the invention, a control system configured to control the operation of a wind turbine is provided. The wind turbine comprises a wind turbine rotor with one or more rotor blades, wherein the control system optionally operates at least one load reduction pitch control function configured to adjust a blade pitch angle to reduce a blade load. The control system is configured to perform any of the methods described herein. The control system may for example comprise a processing unit and a memory, wherein the memory may store control instructions which, when executed by the proceeding unit, cause the control system to perform any of the methods described herein.

According to a further aspect of the invention, a wind turbine comprising a wind turbine rotor with one or more rotor blades (e.g. 2, 3 or more) is provided. The wind turbine further comprises a control system having any of the configurations described herein. The control system may be configured to control a pitch angle of each of the one or more rotor blades, and may further be configured to control an output power and/or a rotational speed of the rotor of the wind turbine. The control system may comprise a wind turbine controller and a pitch controller.

According to a further aspect of the invention, a computer program for controlling the operation of a wind turbine is provided. The wind turbine comprises a wind turbine rotor with one or more rotor blades, wherein the computer program comprises control instructions which, when executed by a processing unit of a control system of the wind turbine that optionally operates at least one load reduction pitch control function configured to adjust a blade pitch angle to reduce a blade load, cause the processing unit to perform any of the methods disclosed herein. The computer program may be provided on a volatile or non-volatile data carrier or storage medium and/or may be provided via a communication connection, such as a wired or wireless network connection.

By such control system, wind turbine or computer program, advantages similar to those outlined further above with respect to the method may be achieved.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine including a control system according to an embodiment.
Fig. 2 is a schematic block diagram illustrating a control system that includes a load reduction pitch control function and provides curtailment according to an embodiment.
Fig. 3 is a schematic diagram showing graphs that illustrate a pitch adjustment output, a filtered pitch adjustment output, and a curtailment signal.
Fig. 4 is a schematic diagram showing graphs that illustrate a pitch adjustment output, a filtered pitch adjustment output, and a curtailment signal.
Fig. 5 is a flow diagram illustrating a method according to an embodiment that may be performed by the control system of Fig. 2.
Fig. 6 is a flow diagram illustrating a method according to an embodiment that may be performed by the control system of Fig. 2.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

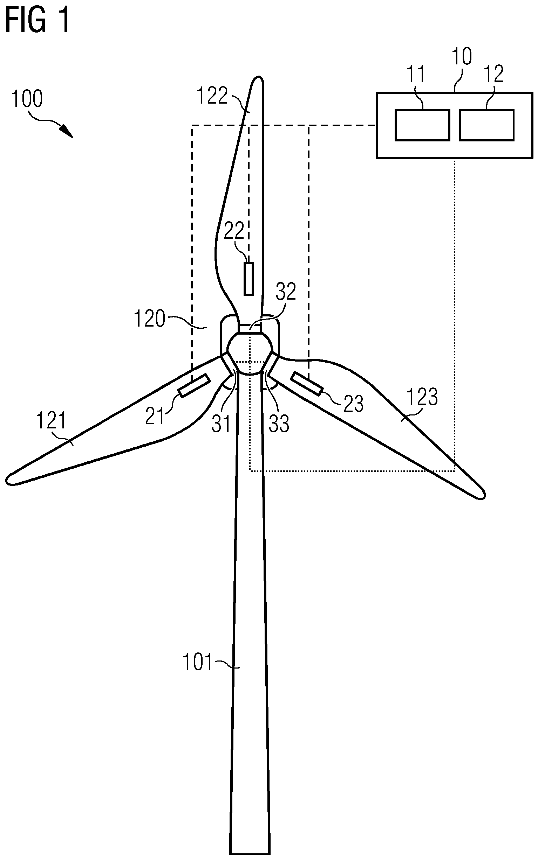

Fig. 1 schematically illustrates a wind turbine 100 comprising a wind turbine tower 101 and a wind turbine rotor 120. The rotor 120 has three rotor blades 121, 122 and 123. Wind turbine 100 may be an onshore, an offshore, or a floating wind turbine. Such wind turbines are generally known in the art, and wind turbine 100 may have any of the known configurations.

Wind turbine 100 comprises control system 10 that includes a processing unit 11 and a memory 12. Control system 10 may communicate with or comprise the load sensors 21, 22, 23 which are configured and arranged to measure blade loads of blades 121 to 123. Load sensors 21 to 23 may for example comprise strain sensors, such as an optical fiber measuring strain by measuring a change of refractive index. Control system 10 may receive respective blade load measurements from sensors 21 to 23.

Control system 10 may further be configured to control pitch drives 31, 32 and 33 of blades 121 to 123. Blades 121 to 123 may be mounted via a respective pitch bearing to a hub of rotor 120. Pitch drives 31 to 33 are operable to turn the respective blade about its longitudinal axis to thereby change the pitch angle. Pitch drives 31 to 33 may be electrically, hydraulically or pneumatically actuated, and any known pitch drive configuration may be employed.

Control system 10 may include a processing unit 11 coupled to a memory 12. Processing unit 11 may be a micro-processor, a digital signal processor, an application-specific integrated circuit, or the like. Memory 12 may comprise RAM, ROM, Flash-Memory, a hard disk drive and other types of memory. Memory 12 may store control instructions which, when executed by processing unit 11, cause the control system 10 to perform any of the methods disclosed herein. Control system 10 may be implemented in one or more controllers and may accordingly comprise plural processing units and plural memories. Control system 10 may comprise further components common to such control system, for example input/output interfaces, a system bus, a user interface and the like.

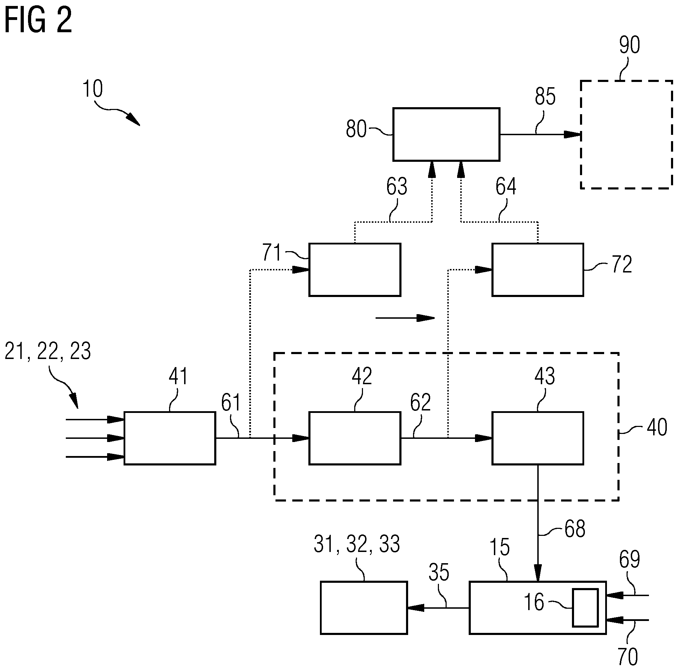

The control system 10 further comprises a curtailment controller operable to provide a curtailment of the output power and/or of the rotational speed of the rotor 120 of the wind turbine 100. Control system 10 may for example comprise a wind turbine controller 90 (Fig. 2) which may control the output power and/or the rotational speed, for example in accordance with a maximum power point tracking control scheme. Respective control schemes are known of the art and any of these may be employed with the present embodiments.

Fig. 2 illustrates a possible implementation of the control system 10. Respective load signals may be received from the load sensors 21, 22, 23 at the operating parameter determination unit 41, which determines one or more operating parameters 61 therefrom. As mentioned above, an operating parameter may for example be a blade load, a blade moment, such as a flapwise or edgewise bending moment, an in-plane or out-of-plane bending moment, a rotor moment, such as a tilt or a yaw moment, and the like. Parameter 61 is thus indicative of the loading experienced by the blades 121 to 123 and/or the rotor 120. The control system implements a load reduction pitch control function 40 which may have any of the configurations described herein. It receives the operating parameter 61 at a pitch adjustment output generation unit 42 and generates therefrom the pitch adjustment output 62. How this is done depends on the particular implementation of the function 40. If parameter 61 for example indicates a particular tilt moment, the unit 42 determines the pitch adjustment that would be necessary for countering such tilt moment.

The pitch activation controller 43 determines an actual pitch adjustment 68 based on the pitch adjustment output 62. For example, it may compare the pitch adjustment output 62 to a respective threshold, and, if the threshold is exceeded, may output a predetermined actual pitch adjustment 68, such as a constant value or a value that depends on the amount by which the threshold is exceeded. Other implementations are conceivable. The actual pitch adjustment 68 is provided to the pitch controller 15, which generates a respective pitch drive signal 35. The pitch controller 15 may receive further signals for controlling the pitch angle of rotor blades 121 to 123. It may receive a main pitch control signal 70 that indicates the pitch angle to which the respective rotor blade is to be adjusted. Such signal may for example be determined by the wind turbine controller 90 based on a respective pitch angle operating curve that provides an optimal pitch angle in dependence on an operating parameter, such as in dependence on an output power of the wind turbine, a rotational speed of the rotor, and the like. Respective operating curves, such as an opti-pitch curve, are known in the art and may be employed with the present solution. The actual pitch adjustment 68 may for example provide an offset to the whole pitch angle operating curve, or to one, two, three or more points of the curve. In other implementations, it may simply provide a pitch offset that is added to the pitch angle provided by the main pitch control signal 70. A respective combiner 16 may be employed for this purpose. It is further conceivable that the pitch controller 15 receives one or more further pitch adjustment control signals 69, which may likewise be combined with the main pitch signal 70 by the combiner 16. Plural respective functions 40 may for example operate in parallel, such as the above-mentioned individual pitch control (IPC) and the tip tower clearance control (TTCC), or any other combination of respective pitch control functions.

The pitch drive signal 35 is provided to the pitch drives 31 to 33, which adjust the pitch angle of the rotor blades 121 to 123 in accordance with the drive signal. Thus, if excessive loads are acting on the blades and/or the rotor, so that the output of unit 42 exceeds the respective threshold(s), as determined by unit 43, the pitch angle of the rotor blades is adjusted, thereby lowering the load on the rotor blades and/or the rotor.

As mentioned above, this may result in rather frequent activations and deactivations of the blade pitch drives, and thus to a frequent operation of the blade pitch bearings, which may result in pitch bearing damage. Furthermore, such load reduction pitch control function 40 may become saturated at a certain point, and may further not be capable of reacting sufficiently fast. It may further not sufficiently suppress the mechanical loads experienced by the wind turbine components, such as shocks that may be experienced if a blade transitions from an area without wake effect into an area where it experiences wake effects. To alleviate such negative effects, the curtailment controller 80 is provided.

In an exemplary implementation, curtailment controller 80 operates based on the one or more operating parameters 61. Operating parameter 61 may be received at a processing unit 71 which may be implemented in different ways. It may for example be implemented as a filter, preferably having a low-pass response. Such filter may provide an averaging, preferably a weighted cumulative average, or may be a low-pass filter, a band-pass filter or the like. It may for example filter a blade load, a blade moment, a rotor moment, or the like. The processed operating parameter 63 is then provided to curtailment controller 80. Curtailment controller 80 may compare the processed operating parameter 63 to a respective threshold. If the threshold is exceeded, it provides a curtailment signal 85 to the wind turbine controller 90. Curtailment signal 85 may for example comprise an adjustment value for a reference for the output power of the wind turbine to curtail the output power, and/or an adjustment value for a rotational speed set-point for the wind turbine rotor to curtail the rotational speed of the wind turbine rotor. These may be applied by the wind turbine controller 90 to the respective set-points. Consequently, by reducing the output power and/or the rotational speed, the load on the rotor blades and/or the rotor is reduced. Making use of the adjustment of the respective set-points further facilitates load reduction. If the operating parameter for example rises quickly to high values, such as high blade moments or a high rotor moment, curtailment controller 80 can thus react quickly to reduce the loading of the blades and of the rotor. This occurs even if the pitch control function 40 already operates at its limits, or has not reacted yet.

Processing by the processing unit 71 is optional. Providing a respective filtering for example achieves that the curtailment is applied if the rise in the operating parameter is not transitory, as a result of which frequent activations and deactivations of the curtailment can be avoided. Furthermore, as the loading of the blades and/or the rotor is relieved, it may be avoided that the function 40 frequently activates and deactivates the pitch drive. In particular, a threshold applied by unit 43 may not be met, so that no actual pitch adjustment 68 is given out (or a zero value is given out). During a cyclic loading, curtailment controller 80 may provide an overall load reduction that is not activated and deactivated periodically, so that it is avoided that the pitch control function periodically pitches in and out the rotor blades.

In another exemplary implementation, which may be used additionally or alternatively, the pitch adjustment output 62 is provided to a (second) processing unit 72 that processes the pitch adjustment output and provides a processed pitch adjustment output 64. Again, the respective processing may occur by filtering using a filter having a low-pass response, such as an averaging, in particular a weighted cumulative average, application of a low-pass or band-pass filter, exponential smoothing, and the like. Similar to operating parameter 61, the pitch adjustment output 62 is indicative of the blade and/or rotor loads. If the processed pitch adjustment output 64 exceeds a respective threshold, the curtailment controller 80 gives out a respective curtailment signal 85, as described above.

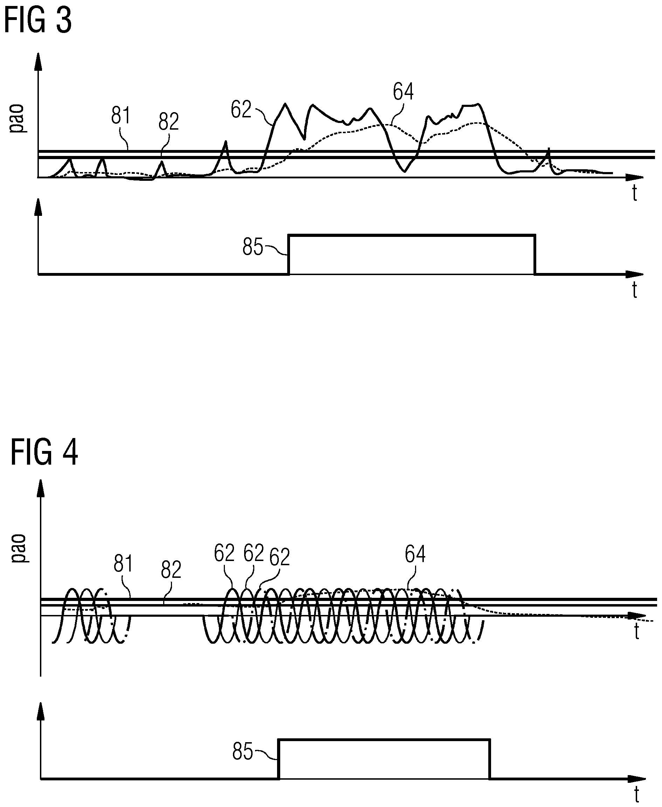

Fig. 3 shows graphs that illustrate the respective signals over time according to an example. As can be seen, the pitch adjustment output 62 fluctuates significantly over time. The processed pitch adjustment output 64 is smoothed due to the low-pass response of the filter of processing unit 72. Curtailment controller 80 employs a first threshold 81. The predetermined criterion checked by the curtailment controller 80 may be that the processed pitch adjustment output 64 exceeds the first threshold 81. As illustrated in the lower graph of Fig. 3, a curtailment 85 having a predefined value is applied upon the criterion being met. In some implementations, the curtailment is removed after the processed pitch adjustment output 64 drops again below the first threshold 81. In other implementations, a hysteresis is applied and a second threshold 82 is employed. The curtailment is removed upon the processed pitch adjustment output 64 dropping below the second threshold 82. Accordingly, frequent activations and deactivations of the curtailment may be avoided. Instead of using two thresholds, it is also conceivable to apply the curtailment 85 for a minimum amount of time before allowing removal of the curtailment.

As can be seen, whereas the processed pitch adjustment output 64 only results in one activation and deactivation of the curtailment, the (unfiltered) pitch adjustment output 62 fluctuates more strongly and repeatedly intersects the first and second thresholds 81, 82. Processing by unit 72 thus allows a more consistent operation that avoids frequent activation and deactivation of the curtailment. It is however noted that such processing by unit 72 is likewise optional.

Fig. 4 illustrates respective graphs according to a further example. In this example, the function 40 may be implemented as an individual pitch control function that makes use of tilt and yaw moments of the wind turbine rotor, wherein the function determines a pitch offset for each individual blade to reduce the respective loading. These pitch offsets for the individual blades are given out as the pitch adjustment output 62. The upper graph of Fig. 4 illustrates the pitch adjustment outputs for the three rotor blades 121 to 123, which are naturally phase-shifted by 120°. In this example, the processing unit 72 may average the three signal components of the pitch adjustment output 62 and may further apply a respective low-pass response by unit 72. The resulting processed pitch adjustment output 64 is shown in Fig. 4**.** Again, upon the first threshold 81 being exceeded, the curtailment signal 85 is generated by the curtailment controller 80. Upon signal 64 dropping below the second threshold 82, curtailment is terminated. The processing, in particular the filtering, may thus also comprise an averaging over several signal components of the pitch adjustment output, in particular over the signal components for the three rotor blades.

It should be clear that the above explanations provided with respect to Figs. 3 and 4 and to the processing by unit 72 apply correspondingly when employing the operating parameter 61 and processing by unit 71. In particular, the operating parameter 61 may likewise comprise respective load signal components or moment components for the individual rotor blades, which may correspondingly be averaged by unit 71.

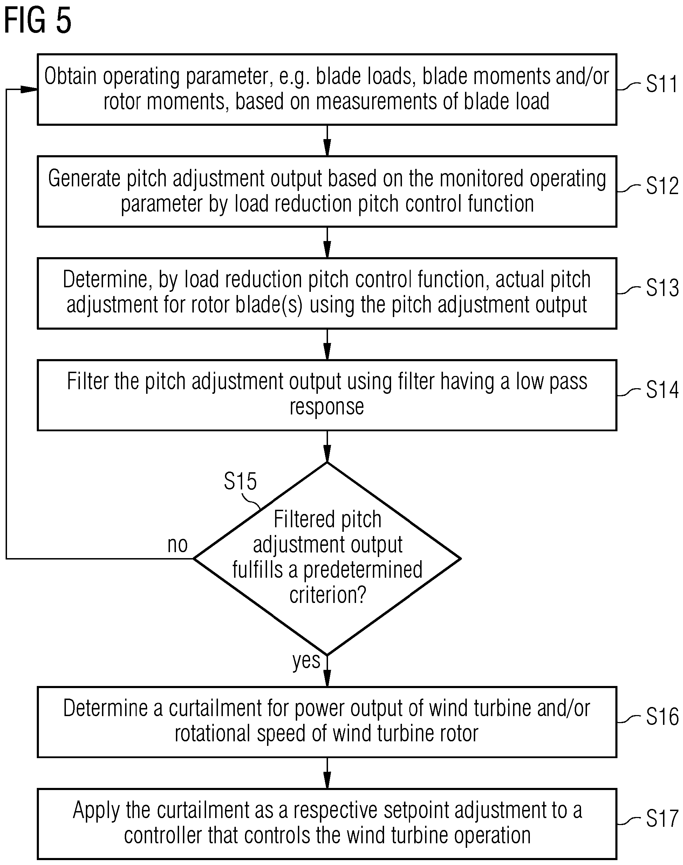

Fig. 5 shows a flow-diagram that illustrates a respective method that may be performed by the control system 10. In step S11, operating parameters are obtained based on the measurements of blade load, for example by unit 41 providing the operating parameter signal 61. The pitch adjustment output 62 is generated in step S12 based on the monitored operating parameter 61 by the load reduction pitch control function 40. In step S13, the load reduction pitch control function 40 determines the actual pitch adjustment 68 for the one or more rotor blades using the pitch adjustment output 62. As explained above, this may occur by a respective thresholding.

In step S14, the pitch adjustment output 62 is filtered using a filter having a low-pass response, e.g. by means of the processing unit 72. In step S15, it is determined if the filtered pitch adjustment output 64 fulfills a predetermined criterion, for example exceeds a respective threshold 81. If this is not the case, the method continues in step S11.

If the predetermined criterion is fulfilled, the method continues in step S16 with determining a curtailment for the power output of the wind turbine and/or for the rotational speed of the wind turbine rotor. The curtailment is applied as a respective set-point adjustment, e.g. via the curtailment signal 85, to a controller that controls the wind turbine operation, such as the wind turbine controller 90. Accordingly, excessive loads may be reduced efficiently.

Turning back to Fig. 2, excessive loads are detected in the above examples by filtering the signals 61, 62 by the processing unit 71, 72, respectively, and comparing the respective filtered signal against a threshold. In other implementations, the respective signals may be analyzed differently by units 71, 72 to detect or estimate/predict such excessive loading.

In such alternative implementation, the unit 71 or 72 may for example estimate or predict a peak load, based on the respective signal 61 or 62. For example, a probability may be determined that a load of a certain size will occur (e.g. above a peak load capacity of the structural components). Such estimation or prediction may be based on the signal points collected up to the present point in time. Respective predictive filters exist and may be employed in units 71 and/or 72. As an example, exponential filtering, a Kalman filter, or a particle filter may be used for this purpose. Accordingly, if a probability that a respective high load, e.g. a load above a certain load value, may occur is detected (e.g. a probability above a certain probability threshold), a respective curtailment may be applied by the curtailment controller 80.

In other implementations, a value for the peak load may be estimated or predicted using respective filters or other models of the system. Upon such estimated or predicted peak load value exceeding a respective threshold value, the curtailment controller 80 may likewise apply a respective curtailment via the curtailment signal 85. Accordingly, by such peak load estimation or prediction, excessive loading of the blades and/or the rotor may efficiently be avoided. In particular, such curtailment based on predictive peak load estimation may act quickly even prior to the occurrence of such peak load. Fatigue loading may thus further be reduced and damage to the wind turbine components may thereby be avoided.

In a particular example, the processing unit 71 may determine a running mean value and a standard deviation of the operating parameter 61. It may further combine the mean value of the operating parameter with a scaled standard deviation to estimate a peak load. It may for example scale the standard deviation in correspondence to an increase in the monitored mean value and use it to estimate a peak value for the increased mean value. The estimated peak value may correspond to a certain probability of occurrence as determined by the standard deviation for a natural distribution, and a (further) scaling of the standard deviation may be applied to estimate a peak value having a desired probability of occurrence. For example, twice the standard deviation may be added the mean value to estimate a peak load having a rather low probability of occurrence, which may allow operation with a high safety margin.

In the above embodiments, the load reduction pitch control function 40 is optional. For example, only the units 41, 71 and 80 may be present, wherein the processing unit 71 generates the processed operating parameter 63, e.g. the probability of occurrence of the peak load or an estimated/predicted peak load, and the curtailment controller 80 performs the comparison to a respective probability threshold or peak load threshold and, as the case may be, gives out a respective curtailment signal.

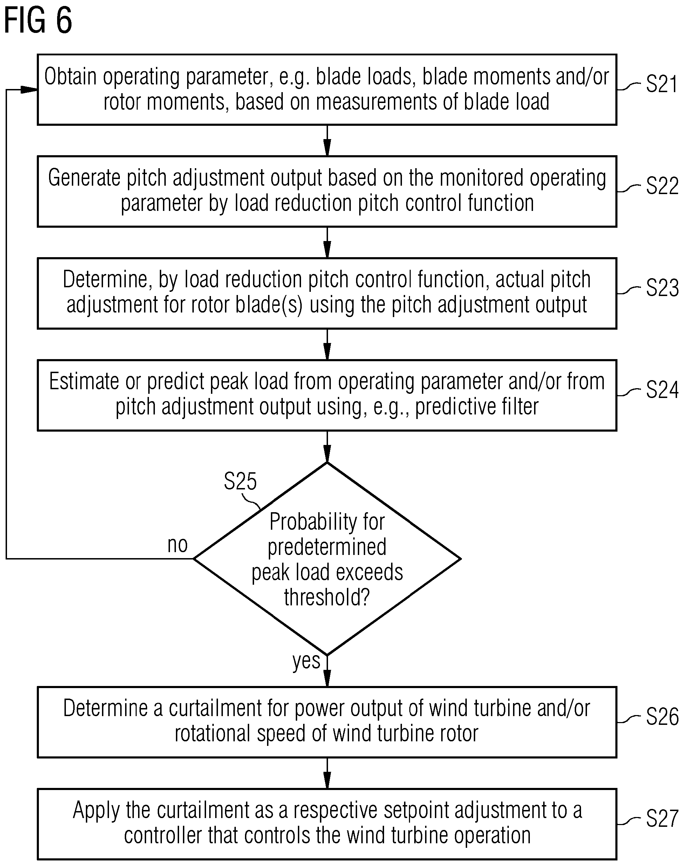

A respective method that may be performed by control system 10 is illustrated in the flow-diagram of Fig. 6. Steps S21 to S23 correspond to steps S11 to S13 of Fig. 5, so that reference is made to the explanations given above. In step S24, the peak load on the rotor blades and/or the rotor is estimated or predicted from the operating parameter 61 and/or from the pitch adjustment output 62. This may occur by using a respective predictive filter as mentioned above, or any other modeling method.

In step S25, it is checked if a predetermined criterion is fulfilled by checking if the probability for the occurrence of a predetermined peak load exceeds a threshold. If this is not the case, the method continues in step S21 by continuing with the obtaining of operating parameters, e.g. by continuing measurement of blade loads and determining respective moments. If in step S25, the probability exceeds the threshold, a curtailment for the power output of the wind turbine and/or for the rotational speed of the wind turbine rotor is determined in step S26. The curtailment may then be applied as a respective set-point adjustment, e.g. via curtailment signal 85, to a controller that controls the wind turbine operation, such as the wind turbine controller 90 (step S27). By making use of a respective peak load estimation or prediction, an efficient way of preventing excessive loads and of reducing the pitch activations by the pitch control function 40 may thus likewise be provided.

Other possibilities of implementing the processing unit 71, 72 and the curtailment controller 80 exist. For example, a cyclic loading may be detected. For this purpose, the unit 71 and/or 72 may analyze the frequency content of the respective signal 61, 62. In a half-wake situation, the blade load may for example increase and decrease with a frequency that corresponds to the rotation frequency of the wind turbine rotor 120. Accordingly, the signal power at the respective frequency (e.g. in a frequency range about the rotational frequency of the rotor) may be analyzed. Unit 71 and/or 72 may for example provide a respective fast Fourier transformation and may give out signals 63, 64 that indicate the signal power in the respective frequency range. The curtailment controller 80 may then compare the respective signal power in the frequency range to a respective signal power threshold. If the threshold is exceeded, it may provide a respective curtailment via the curtailment signal 85, as explained in detail above. It should be clear that the signal power in other frequency ranges of the respective signal may be analyzed, such as at higher harmonics of the rotational frequency, or the like. In such implementation, a cyclic loading may be detected fast and reliably. Such cyclic loading may in particular result in a frequent activation of the pitch adjustment by the function 40, and may further result in repeated and quick loading and unloading of the rotor blades. This may result in shocks that lead to increased fatigue ware and structural damage. By detecting such cyclic loading and curtailing the power output or rotational speed of the wind turbine in response, increased fatigue loads and damage may be prevented.

Although different implementations of the processing unit 71, 72 and the curtailment controller 80 have been described, it is also possible that the curtailment controller 80 acts directly on either the operating parameter 61 or the pitch adjustment output 62, or on a combination of both (e.g., using respective thresholds). The different embodiments and implementations described herein may certainly be combined, for example a peak estimation may be combined with a determination of the signal power at a particular frequency range, and/or with a thresholding of a pitch adjustment output signal or the like.

Further, the processed signal may also be filtered. For example, if a signal power in a frequency range is determined, this signal power may be filtered with a low pass response in order to reduce the number of activations and deactivations of the curtailment. Likewise, if a peak load or a probability for a certain peak load are estimated or predicted, a respective filtering may be applied prior to these values being compared to a threshold, in order to remove transient behavior. Accordingly, in any implementation, the unit 71 and/or unit 72 may provide filtering with a low pass response.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of controlling the operation of a wind turbine, wherein the wind turbine (100) comprises a wind turbine rotor (120) with one or more rotor blades (121, 122, 123) and a control system (10) that operates at least one load reduction pitch control function (40) configured to adjust a blade pitch angle to reduce a blade load, wherein the method comprises:
- monitoring an operating parameter of the wind turbine (100) based on measurements of a blade load obtained for one or more of the rotor blades (121, 122, 123);
- generating, by the load reduction pitch control function (40), a pitch adjustment output (62) based on the monitored operating parameter (61), wherein the pitch adjustment output (62) is provided for applying an actual pitch adjustment (68) to one or more of the rotor blades (121, 122, 123);
- determining, based on the monitored operating parameter (61) and/or the pitch adjustment output (62), if a predetermined criterion is fulfilled, wherein fulfillment of the predetermined criterion indicates an actual and/or an expected increase in a blade load; and
- if the predetermined criterion is fulfilled, curtailing a power output of the wind turbine (100) and/or a rotational speed of the rotor (120) of the wind turbine (100).

2. The method according to claim 1, wherein the method further comprises filtering the operating parameter (61), filtering a quantity derived from the operating parameter, and/or filtering the pitch adjustment output (62) by a filter having a low pass response, wherein the filtered operating parameter, the filtered quantity and/or the filtered pitch adjustment output, respectively, is used for determining if the predetermined criterion is fulfilled.

3. The method according to claim 2, wherein the filtering comprises one or a combination of applying a low pass filter, applying a band pass filter, determining an average, determining a cumulative average or a weighted cumulative average, integrating or accumulating values, preferably over a predetermined time period or number of samples, applying exponential smoothing, applying a multi-rate filter, taking an absolute value, or applying a multi-rate limiter.

4. The method according to claim 2 or 3, wherein the filtering occurs with a time constant that is longer or with a cutoff frequency that is lower than a time constant or cutoff frequency, respectively, of a response of a monitoring function (41) that monitors the operating parameter and/or of a response of the load reduction pitch control function (40).

5. The method according to any of the preceding claims, wherein determining if the predetermined criterion is fulfilled comprises determining if the operating parameter (61), a quantity derived from the operating parameter and/or the pitch adjustment output (62) exceeds a predefined threshold (81) or exceeds at least one of plural predefined thresholds.

6. The method according to any of the preceding claims, wherein determining if the predetermined criterion is fulfilled comprises determining a signal power of the operating parameter (61) and/or of the pitch adjustment output (62) in one or more frequency ranges, wherein the predetermined criterion is fulfilled if the signal power in the one or more frequency ranges or a filtered signal power in the one or more frequency ranges exceeds a predetermined signal power threshold.

7. The method according to any of the preceding claims, wherein determining if the predetermined criterion is fulfilled comprises estimating or predicting, based on the operating parameter (61) and/or the pitch adjustment output (62), respectively, a peak load for a rotor blade (121, 122, 123) or a peak load for the wind turbine rotor (120) and/or estimating, based on the operating parameter and/or the pitch adjustment output, a probability of occurrence of a predetermined load, wherein the criterion is fulfilled if the estimated or predicted peak load is above a peak load threshold and/or if the probability of occurrence of the predetermined load exceeds a probability threshold.

8. The method according to claim 7, wherein the peak load is estimated from the operating parameter or the filtered operating parameter using a predictive filter, in particular one or a combination of an exponential filter, a Kalmann filter, or a particle filter, and/or wherein the peak load is estimated from the operating parameter and a standard deviation obtained for the operating parameter, and/or wherein the peak load is estimated from maximum values of the operating parameter.

9. The method according to any of the preceding claims, wherein curtailing the power output of the wind turbine (100) comprises reducing a power setpoint of a controller (90) that controls the power output of the wind turbine and/or wherein curtailing the rotational speed of the rotor (120) of the wind turbine comprises reducing a rotor speed setpoint of a controller (90) that controls the rotor speed of the wind turbine.

10. The method according to any of the preceding claims, wherein applying the curtailment (85) comprises at least one of:
- applying a predetermined curtailment;
- applying a curtailment associated with a threshold that has been exceeded, wherein each of plural predefined thresholds is associated with a different level of the operating parameter, the quantity, and/or the pitch adjustment output, respectively, and wherein the curtailment associated with a threshold that has been exceeded is applied;
- applying a curtailment that depends on an amount by which the operating parameter (61), a quantity derived from the operating parameter and/or the pitch adjustment output (62) exceeds a respective threshold (81);
- applying a curtailment that lies between two predetermined thresholds, wherein one of the thresholds has been exceeded by the operating parameter, the quantity and/or the pitch adjustment output.

11. The method according to any of the preceding claims, wherein the operating parameter (61) comprises one or a combination of:
- a blade load of one or more rotor blades (121, 122, 123);
- a tilt moment of the wind turbine rotor (120);
- a yaw moment of the wind turbine rotor (120);
- an out-of-plane moment of a blade of the wind turbine rotor (120) or an average of the out-of-plane moment;
- a peak out of plane moment;
- a change of an out-of-plane moment of the blades (121, 122, 123) of the wind turbine rotor; or
- a tip-to-tower clearance of a rotor blade tip to a tower (101) of the wind turbine (100).

12. The method according to any of the preceding claims, wherein the load reduction pitch control function comprises one or a combination of
- an individual pitch control function that employs a yaw moment and/or tilt moment of the wind turbine rotor as operating parameters to determine a pitch adjustment output for each individual blade to reduce blade loading;
- a blade load limiter function that employs an out-of-plane moment for each rotor blade as operating parameters to estimate a peak moment for each blade to determine a pitch adjustment output for each blade to reduce the peak moment;
- a gust induced load limiting function that employs positive changes of an average out-of-plane moment of the rotor blades as operating parameter to determine a pitch adjustment output for the rotor blades to reduce blade loading; or
- a tip-to-tower clearance control function that employs average out-of-plane moments of the rotor blades and a tilt moment of the wind turbine rotor as operating parameters to determine a pitch adjustment output for the individual rotor blades to reduce blade loading to increase tip-to-tower clearance.

13. The method according to any of the preceding claims, further comprising ceasing the application of the curtailment (85) if the operating parameter (61), a quantity derived from the operating parameter, and/or the pitch adjustment output (62) fulfills a predetermined termination criterion.

14. A control system configured to control the operation of a wind turbine, wherein the wind turbine (100) comprises a wind turbine rotor (120) with one or more rotor blades (121, 122, 123) and a control system (10) that operates at least one load reduction pitch control function configured to adjust a blade pitch angle to reduce a blade load, wherein the control system (10) is configured to perform the method according to any of the preceding claims.

15. A computer program for controlling the operation of a wind turbine, wherein the wind turbine (100) comprises a wind turbine rotor (120) with one or more rotor blades (121, 122, 123), wherein the computer program comprises control instructions which, when executed by a processing unit (11) of a control system (10) of the wind turbine that operates at least one load reduction pitch control function (40) configured to adjust a blade pitch angle to reduce a blade load, cause the processing unit (11) to perform the method according to any of claims 1-13.
